# EUROPEAN PATENT SPECIFICATION

(11) **EP 1 504 962 B1**
(45) Date of publication and mention of the grant of the patent: **14.03.2007**
(21) Application number: 04254230.8
(22) Date of filing: 15.07.2004
(51) Int. Cl.: B60R 7/02

(54) **Organizer for storage space in an automobile**
Vorrichtung zur Laderaumeinteilung in einem Fahrzeug
Dispositif de rangement pour des articles transportes dans un vehicule

(30) Priority: 15.07.2003 US 486890 P
(43) Date of publication of application: 09.02.2005
(60) Divisional application: 07001790.0
(73) Proprietor: Exco Automotive Solutions Canada Inc., Dartmouth, Novia Scotia B3B 1J3 (CA)
(72) Inventor: Tarrant, Christopher, Truro Nova Scotia B2N 6R4 (CA); Ryan, Patrick T., Halifax Nova Scotia B3L 4R9 (CA); Briggs, Robert S., Dartmouth Nova Scotia B2W 6K3 (CA); Book, Michael T., Sackville Nova Scotia B4E 2L6 (CA)
(74) Representative: Wolff, Francis Paul

(56) References cited:
- DE-A- 2 605 298
- US-A- 5 392 972
- US-A1- 2002 014 777

## Description

### FIELD OF THE INVENTION

The present invention relates generally to automobiles. More particularly, the present invention relates to an organizer for storage space in an automobile.

### BACKGROUND OF THE INVENTION

Cargo management is a growing automotive industry trend leading to many exciting products. Sedan trunk organization is one area of focus. Today many vehicles have an "envelope net" to contain items stored in the trunk, as well as unique side pockets and compartments. Although somewhat useful both have limitations resulting in the desire for a more improved organizational product. Although the prior art envelope net storage alternative is low cost, it is difficult to place items such as grocery bags within the net with only one hand such that both hands are sometimes necessary. Furthermore, the envelope net is limited to the weight of objects that can be contained and has limited flexibility of divided storage spaces.

It is, therefore, desirable to provide an improved organizer for storage area in an automobile which overcomes some of the disadvantages of the prior art.

Among the prior art, US Patent No 5,392,972 and published US Patent Application No. 2002/0014777 disclose collapsible organizers for dividing vehicle storage areas using a base, a fixed wall, a pivotal divider wall, and folding partitions, in accordance with the preamble of claim 1.

### SUMMARY OF THE INVENTION

It is an object of the present invention to obviate or mitigate at least one disadvantage of previous organizers for storage space in an automobile.

The organizer of the present invention includes improved features that have a high customer appeal. In one embodiment, a narrow front to back product provides improved organization for confined storage spaces such as the trunks of SUV's and vans with a small confined cargo area. This is typically the case when a third row seat is installed.

Furthermore, the divider wall of the organizer is collapsible when in a stored position therefore taking up very little of the or no storage space so that large items such as golf clubs and luggage can then be stored in the storage space. The organizer may also contain heavier items such as milk jugs without breaking.

Furthermore, the organizer is designed for one-handed use or an easy to operate two-handed motion.

In one embodiment, the organizer is secured to the rear trunk wall in a sedan or potentially under the sill plate molding in a narrow back SUV or a van and is easily detached should access to the spare tire well be required.

In one aspect of the present invention according to claim 1, there is provided a collapsible organizer for dividing a vehicle storage area of a vehicle into at least two storage compartments comprising a base; a fixed wall; a divider wall, pivotally mounted to the base for rotation between a stored position against the base and an upright position spaced apart from and generally parallel to the fixed wall; at least two partitions extending between the fixed wall and the divider wall; and means for locking the divider wall in the upright position; wherein said partitions are detachable.

Features of the invention will become apparent to those ordinarily skilled in the art upon review of the following description of specific embodiments of the invention in conjunction with the accompanying figures and claims.

### BRIEF DESCRIPTION OF THE DRAWINGS

Embodiments of the present invention will now be described, by way of example only, with reference to the attached Figures, wherein:
Figures 1a to 1f are schematic diagrams of a first embodiment of an organizer for storage space in an automobile.
Figures 2a to 2e are schematic diagrams of a second embodiment of the organizer.
Figures 3a to 3e are schematic diagrams of a third embodiment of the organizer.
Figures 4a to 4b are schematic diagrams of a fourth embodiment of the organizer.
Figures 5a to 5b are side views of methods of fastening the organizer to a vehicle.
Figures 6a to 6f are schematic diagrams of a fifth embodiment of the organizer.
Figure 6g is a schematic diagram of a cable actuated locking hinge system.
Figures 7a to 7b are schematic diagrams of a sixth embodiment of the organizer.
Figures 8a to 8d are schematic diagrams of yet another embodiment of the organizer.
Figures 9a to 9d are schematic diagrams of a further embodiment of the organizer.
Figures 10a to 10d are schematic diagrams of another embodiment of the organizer.
Figures 11a to 11d are schematic diagrams of a further embodiment of the organizer for use under a cab seat.
Figures 12a to 12c are schematic diagrams of yet another embodiment of the organizer.

### DETAILED DESCRIPTION

Generally, the present invention provides apparatus for an organizer for storage space in an automobile.

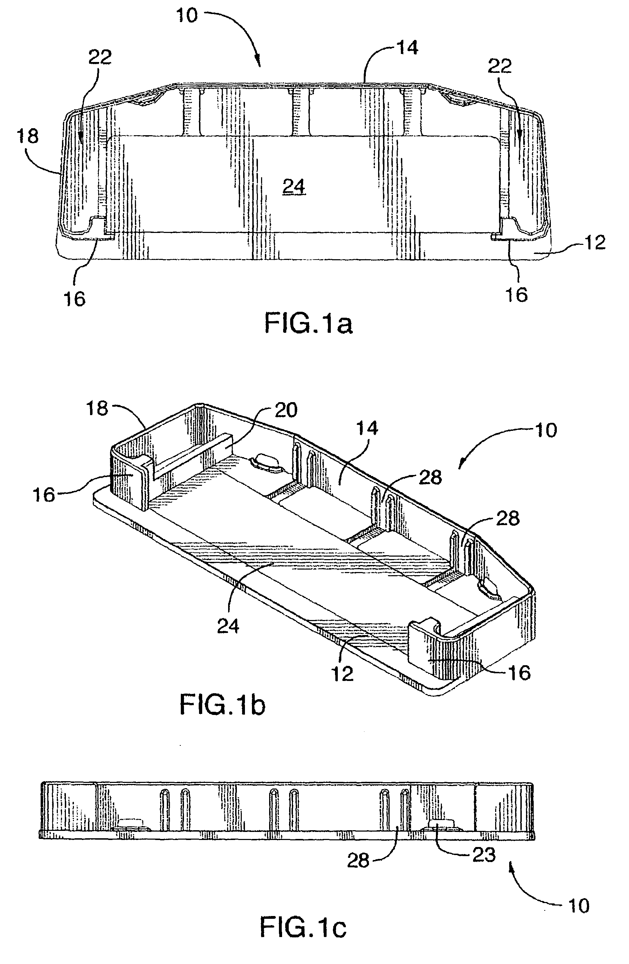

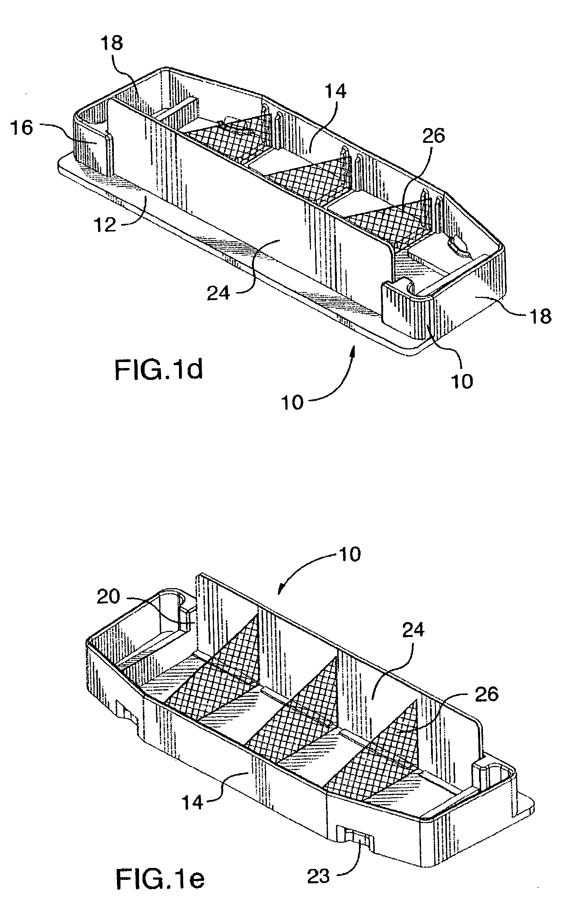

Turning to Figures 1a to 1f, a first embodiment of an organizer for storage space in an automobile is shown. This embodiment is preferably manufactured for use in a trunk of an automobile such as a sedan and is preferably integrated/attached with the rearward perimeter of the trunk. Figure 1a is a top plan view of the organizer, while Figure 1b is a perspective view of the organizer in a stored position and Figure 1c is a front view of the organizer in the stored position. Figure 1d is a perspective front view of the organizer in an in use position and Figure 1e is a perspective rear view of the organizer in the in use position. The organizer **10** comprises a base **12**, which is elongated in this embodiment, with a fixed wall **14** along the long end of one side of the base **12**. The fixed wall **14** is connected to a pair of support pillars **16** via a pair of side walls **18**. The support pillars **16** also include a moulded section **20** which connects to the fixed wall **14** to provide side pockets **22** for the organizer **10**. The organizer **10** also preferably includes cargo hook access areas **23** for existing vehicle cargo hook access. The organizer **10** further comprises a divider wall **24** which is in an upright position for containing items within the organizer when the organizer is in the in use position as shown in Figure 1d and stores flat to the base when in the stored position as shown in Figure 1b. When in the in use position, the divider wall **24** is spaced apart from and generally parallel to the fixed wall **14**. In order for the divider wall **24** to move from the stored position to the in use position and vice versa, the divider wall **24** is pivotally mounted or slotted into the base **12.**

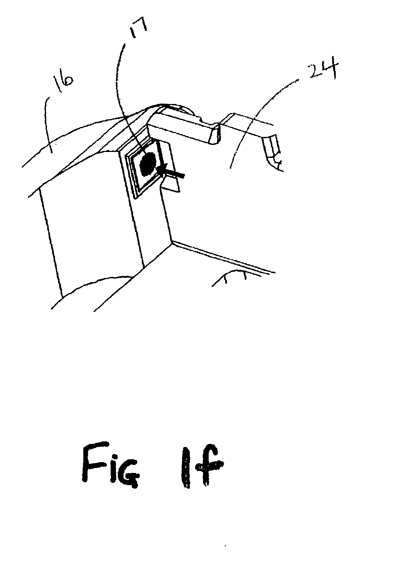

Detachable partitions **26,** preferably made of netting, allow for varying sized compartments within the organizer. The partitions **26** are preferably attached at predefined locations **28** located on the fixed wall **14** and the divider wall **24**. This allows for a plurality of compartments to be available within the organizer so that items such as groceries and antifreeze may be stored separately. The support pillars **16** assist in supporting the divider wall **24** when the divider wall is in the upright position and may also be used to provide an attachment location for the detachable partitions. In the present embodiment, in the in use position, the organizer **10** includes means for keeping the divider wall in an upright position when in the in use position, seen as a pair of snap clips which are located on the side pillars adjacent the divider wall (which is more clearly shown in Figure 1f). In operation, the divider wall **24** is pivoted from the stored position to the in use position past the snap clip **17** which holds the divider wall in the upright position until a user depresses the snap clip to release the divider wall **24** allowing the wall to pivot back to the stored position. It will be understood that the circumference of the fixed wall **14** and the side walls **18** preferably match the contour of the trunk of the automobile in order to maximize the amount of storage space in the trunk when the organizer is in the stored position.

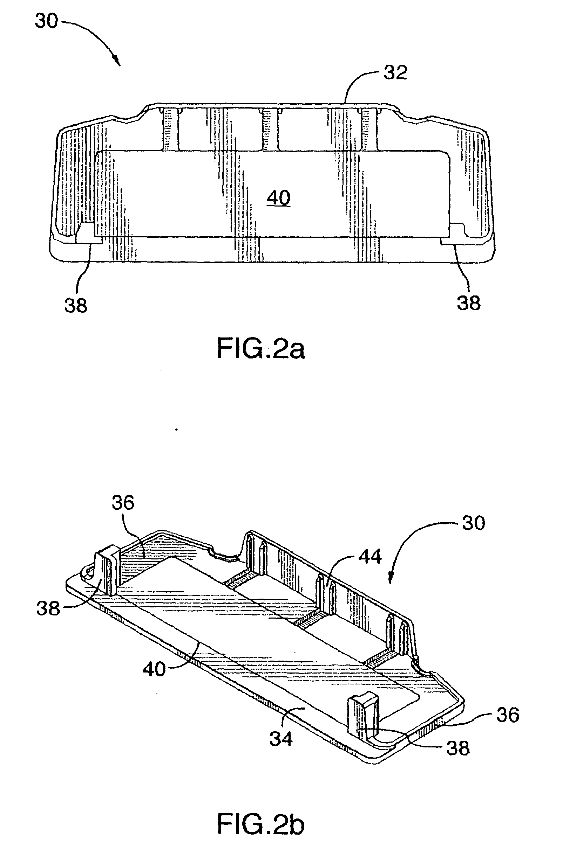

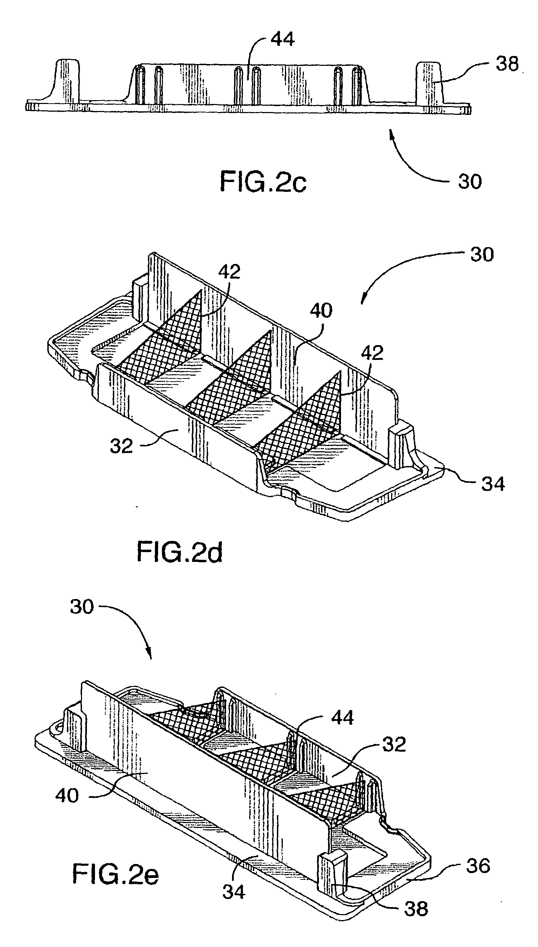

Turning to Figures 2a to 2e, a second embodiment of an organizer is shown. The organizer is similar to the embodiment of Figures 1a to 1e, but is geared for automobiles with short trunk widths since a narrow trunk opening limits installation capability. Figure 2a is a top plan view of the organizer, while Figure 2b is a perspective view of the organizer in a stored position and Figure 2c is a front view of the organizer in the stored position. Figure 2d is a perspective front view of the organizer in an in use position and Figure 2e is a perspective rear view of the organizer in the in use position. The organizer **30** includes a base **34** having a fixed wall **32** which extends along the long edge of the base **34**. A pair of short walls **36** connect the fixed wall **32** to a pair of support pillars **38** located opposite the fixed wall **32**. The support pillars **38** are used as support to a collapsible divider wall **40** as well as to house snap clips to which the divider wall **40** is attached when in the in use position in order to keep the divider wall in an upright position. Detachable partitions **42** allow the user to vary the size of the storage compartments in the organizer. When in the stored position, the collapsible divider wall rests in a housing in the base **34** of the organizer **30** in order to provide more storage space for a user. As with the above-described embodiment, the partitions **42** are attached to the fixed wall **32** and the divider wall **40** via predefined slots **44**. In this embodiment, the partitions **42** may act as end walls for the organizer 30 or the sides of the automobile trunk may be used to enclose the storage area.

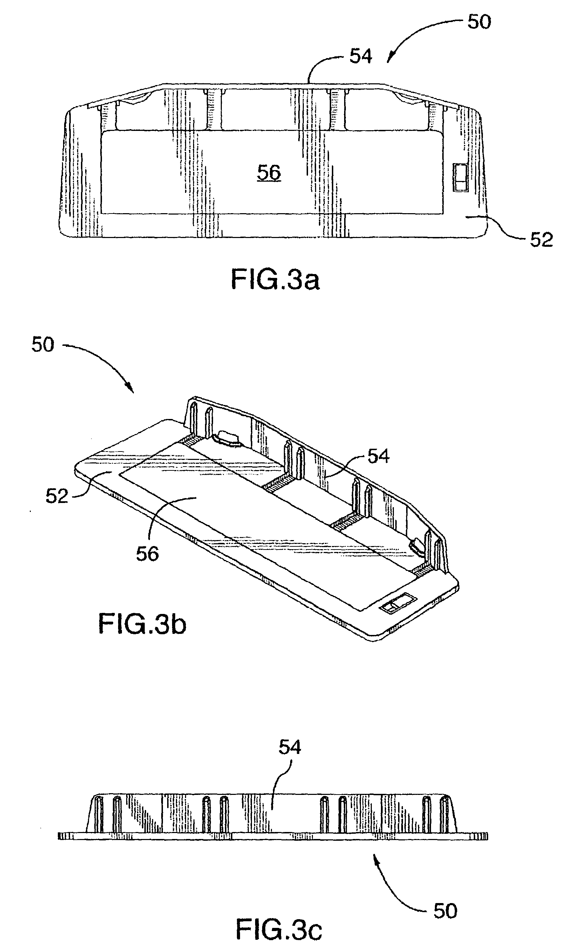

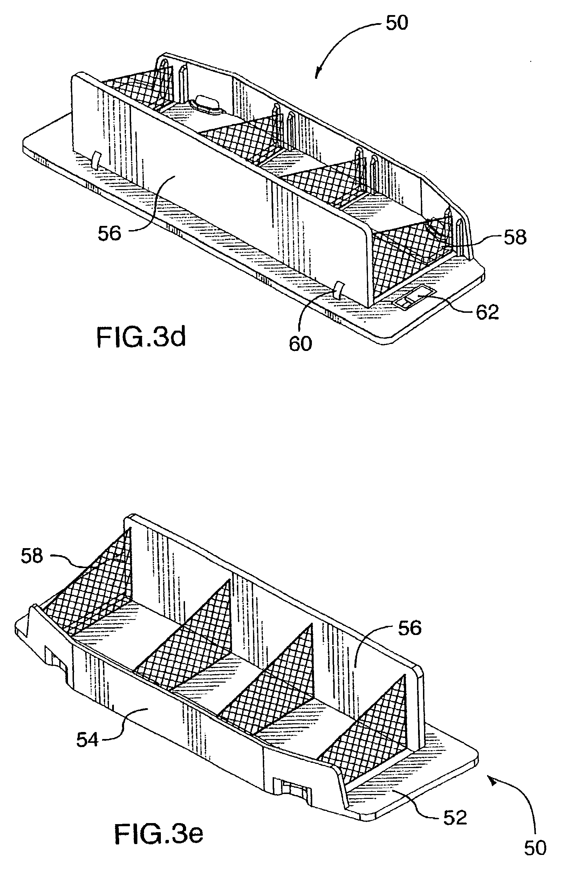

Turning to Figures 3a to 3e, a third embodiment of an organizer is shown. As with the embodiments of Figures 1 and 2, this embodiment is geared towards the storage space of an automobile trunk. In the present embodiment, a lower profile protruding into the trunk space is achieved by removing the support pillars for the divider wall. Figure 3a is a top plan view of the organizer, while Figure 3b is a perspective view of the organizer in a stored position and Figure 3c is a front view of the organizer in the stored position. Figure 3d is a perspective front view of the organizer in an in use position and Figure 3e is a perspective rear view of the organizer in the in use position. The organizer **50** comprises a base **52** and a fixed wall **54** which is located along a long edge of the base **52** of the organizer **50**. The organizer **50** further comprises a divider wall **56** which lies parallel to the base when in the stored position, as shown in Figures 3a to 3c and is generally parallel to and spaced apart from the fixed wall when in the in use position as shown in Figures 3d and 3e.

When the organizer **50** is in the in use position, at least two partitions **58** are connected between the fixed wall **54** and the divider wall **56** in order to provide an enclosed storage area. The outermost partitions **58** also serve as end walls for the organizer. Furthermore, in order to maintain the divider wall in an upright position while in use, the organizer includes means for locking **60** the divider wall in the upright position. In this embodiment, the divider wall is connected to the base via mechanical hinges. A release handle **62** for the mechanical hinges is located at a side of the organizer in order to collapse the divider wall when not in use.

As before, the number of partitions within the storage area may be determined by the user however, at least two partitions at both ends of the organizer are required to provide an enclosed storage space and to prevent any objects from falling out of the organizer storage area.

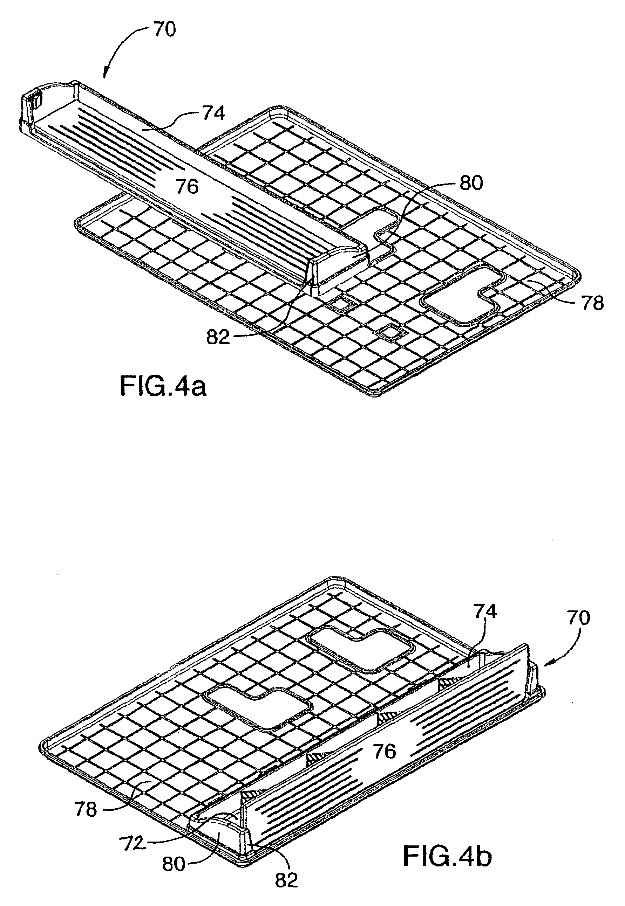

Turning to Figures 4a and 4b, a fourth embodiment of an organizer for storage space in an automobile is shown. This embodiment is geared towards sport utility vehicles (SUVs). In this embodiment, the organizer **70** comprises a base **72** with a fixed wall **74** located along a long edge of the base **72.** A divider wall **76** is pivotally mounted to the base and is spaced apart from the fixed wall **74**. The organizer **70** generally rests on the floor **78** of the SUV so that it may be easily removed and stored to the side when the organizer is not required. In this embodiment, the divider wall **76** is located at the rear of the SUV since the rear of the trunk of a SUV is narrower than the front of the trunk and has no sill wall. This is generally opposite of the design of trunks in other automobiles such as sedans. The organizer **70** also comprises a pair of side walls **80** connected to a pair of support pillars **82** to support the divider wall and to maintain the divider wall **76** in an upright position when in the in use position. Furthermore, the organizer of this embodiment has similar features to the embodiments disclosed above, but the organizer is reversed when placed in the automobile to make it more useable in a narrow backed SUV.

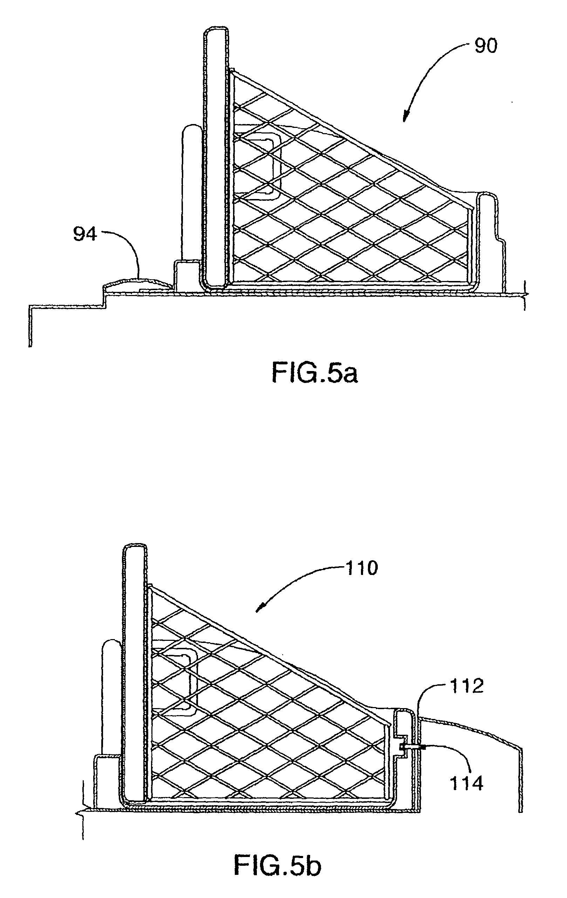

Figures 5a and 5b are side views of the organizer with the partitions in place. Figure 5a illustrates a method of fastening the organizer to the under sill plate attachment in an automobile, preferably an SUV while Figure 5b illustrates a method of fastening the organizer using a push pin/fastener arrangement to the rear wall of a sedan.

In Figure 5a, the organizer **90** is preferably connected to a sill plate of the SUV using an under sill plate attachment **94.** Alternatively, the organizer **90** may be connected to the cargo hooks in the trunk.

In Figure 5b, the organizer **110** is preferably connected to a sill plate **112** of the sedan using a push/pin fastener **114.**

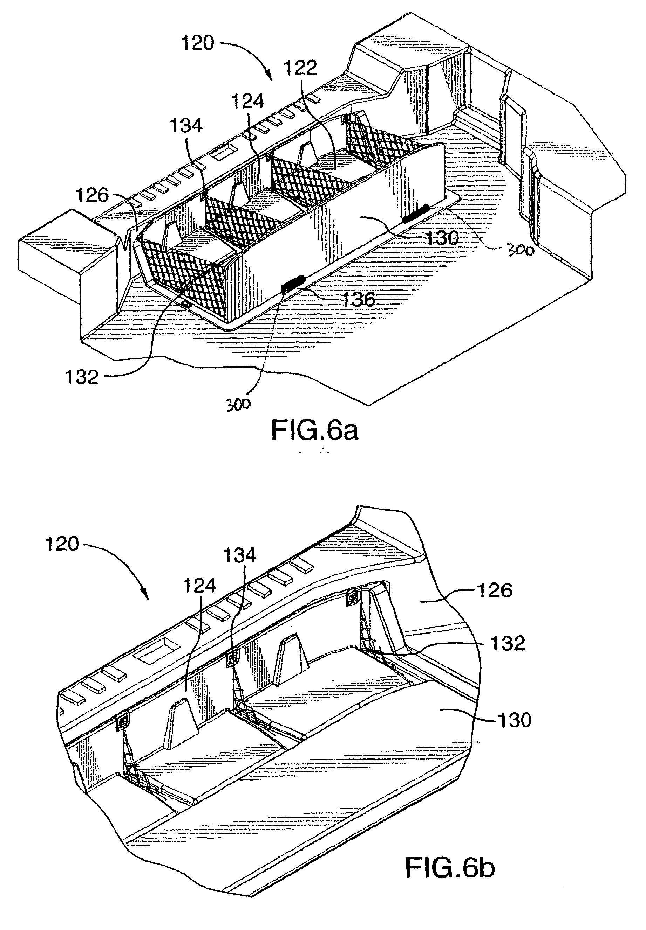

Turning to Figures 6a to 6f, yet another embodiment of an organizer for storage space in an automobile is shown installed in a car trunk.

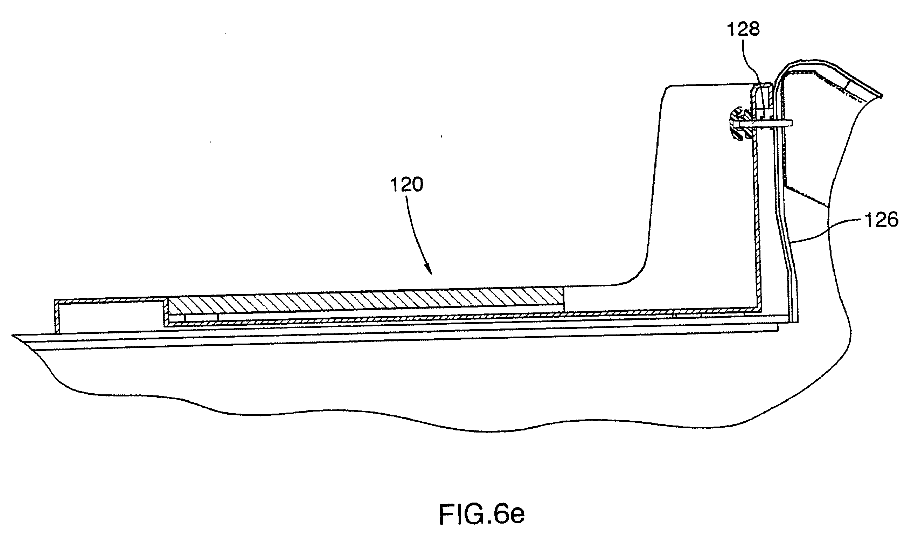

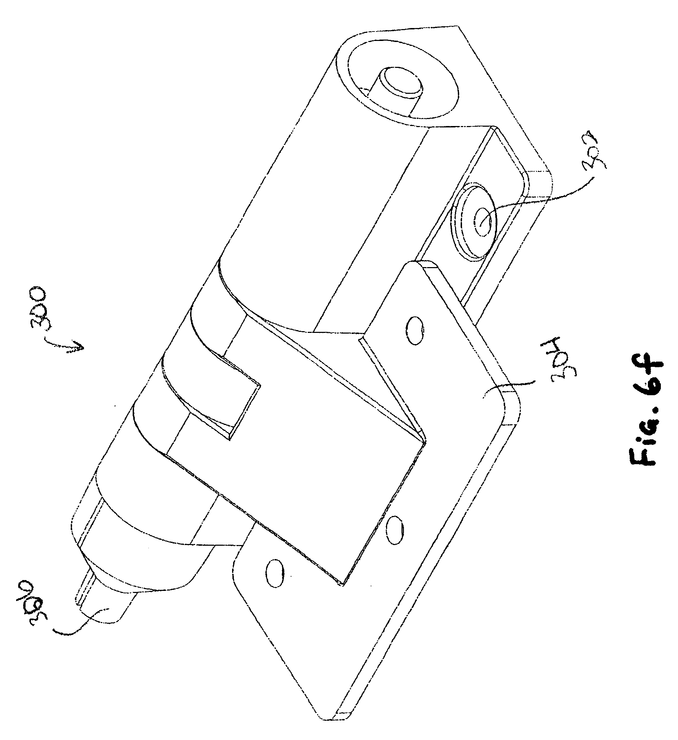

The organizer **120** comprises a base **122** which rests atop the floor of the car trunk in which the organizer **120** is integrated. A fixed wall **124,** substantially perpendicular to the base **122**, is located along the perimeter of the base **122** along at least a long edge of the base **122**. In this embodiment, the fixed wall **124** is attached to a sill plate **126** of the trunk via fastening means **128** such as a threaded fastener. This may be more clearly seen in Figure 6e which provides a cut away side view of the installed organizer.

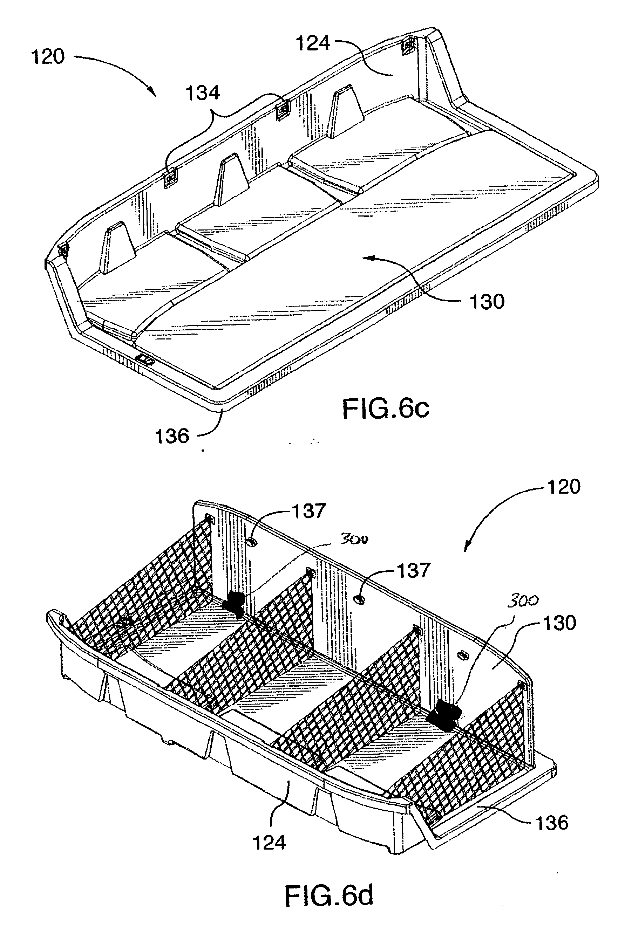

The organizer **120** further comprises a divider wall **130** which is located directly across from the fixed wall **124** when the organizer **120** is in the in use position, as shown in Figure 6a. Partitions **132**, preferably manufactured out of netting, are used to separate the storage space created between the fixed wall **124** and the divider wall **130** in order to provide multiple smaller storage areas in the car trunk for smaller items such as jumper cables, grocery bags, motor oil, shoes, etc....The partitions are attached to hooks **134** located on the fixed wall **124** and the divider wall **130.** In this embodiment, the partitions are preferably flexible so that when the organizer is in the stored position, as shown in Figure 6b, the partitions **132** do not have to be removed but are simply folded down by the divider wall **130**. The organizer **120** further includes a ridge **136** which is located along the perimeter of the base **122** to provide support to the divider wall **130**. Mechanical means **300**, as shown in Figures 6a and 6d, are located within the base to assist in maintaining the divider wall **130** in an upright position when the organizer is in the in use position. This is more clearly shown in Figure 6f which is a schematic diagram of the mechanical means **300** seen as a locking hinge for attaching the divider wall **130** to the base **122**. The hinge is preferably attached to the base **122** using fastening means via a hole **302** in the hinge. The hinge is attached to the divider wall **130** via the plate **304** using fastening means such as screws.

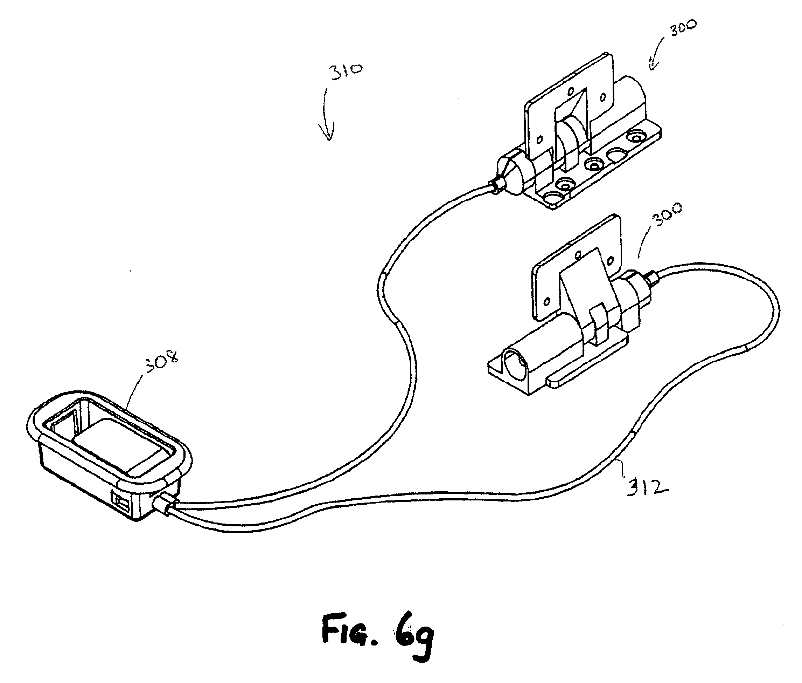

In the upright position, the plate **304** is rotated 90 degrees from its current position in Figure 6f and is locked in place via cables (not shown) connected to a cable connection point **306**. Use of cable actuated locking hinges will be known by those skilled in the art. In order to release the divider wall from the upright position, a lever **308** is pulled in order to release the cables and to allow the hinge to return to the position shown in Figure 6f. Figure 6g provides a schematic diagram of an uninstalled cable actuated locking system **310** with the locking hinges connected via cables **312** to the lever **308.**

In the stored position, as shown in Figure 6b, the divider wall **130** is folded down so that it is parallel to the base **122** of the organizer **124**. As can also be seen, the partitions are folded down as well leaving a single large storage area in the car trunk as if no organizer is present. Figure 6c illustrates the car organizer in the stored position without the partitions for further clarification.

As shown in Figure 6d, the divider wall may also include hooks **137** so that handles of bags, such as grocery bags, may be attached to prevent the bags from tipping during transport and therefore having their contents spill out.

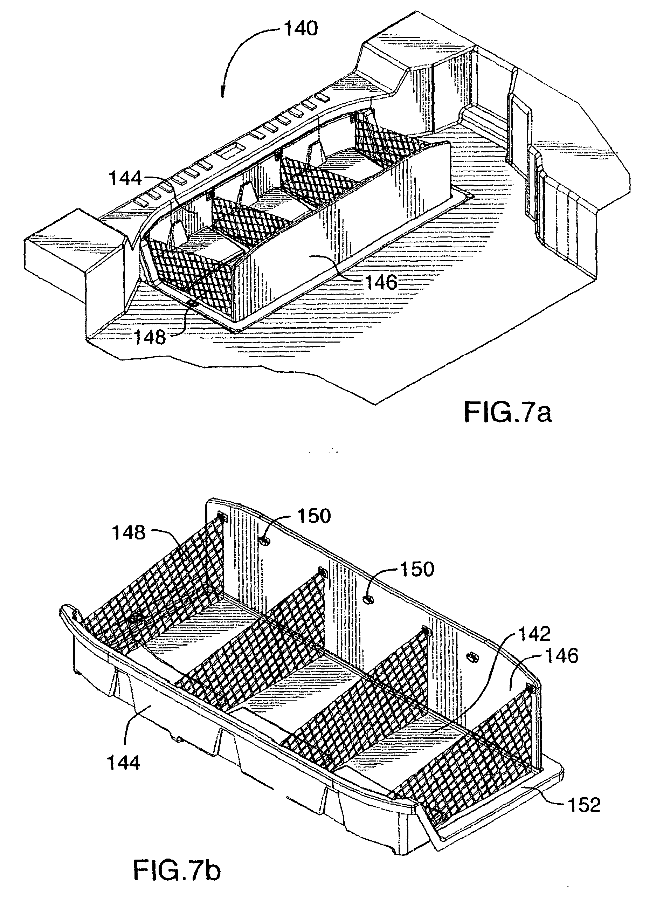

Turning to Figures 7a to 7b, yet a further embodiment of an organizer is shown. The organizer **140** is similar to the organizer of Figures 6a to 6e with the exception that the fixed wall **144** is integrated within the car trunk. Therefore, in this embodiment the requirement for fastening means to attach the organizer to the sill plate of the car trunk is removed.

As shown in Figure 7b, the organizer **140** comprises a base **142** having a fixed wall **144** located along a long edge of the base **142**. A divider wall **146** is pivotally mounted to the base a divider wall **146** for rotation between a stored position and an in use position where the divider wall is upright and is spaced apart from and generally parallel to the fixed wall. The organizer **140** also includes the partitions **148**, bag hooks **150** and a ridge **152** as described above with respect to Figures 6a to 6e. In order to maintain the divider wall in the upright position when in the in use position, the organizer includes means for supporting the divider wall and for holding the divider wall in place.

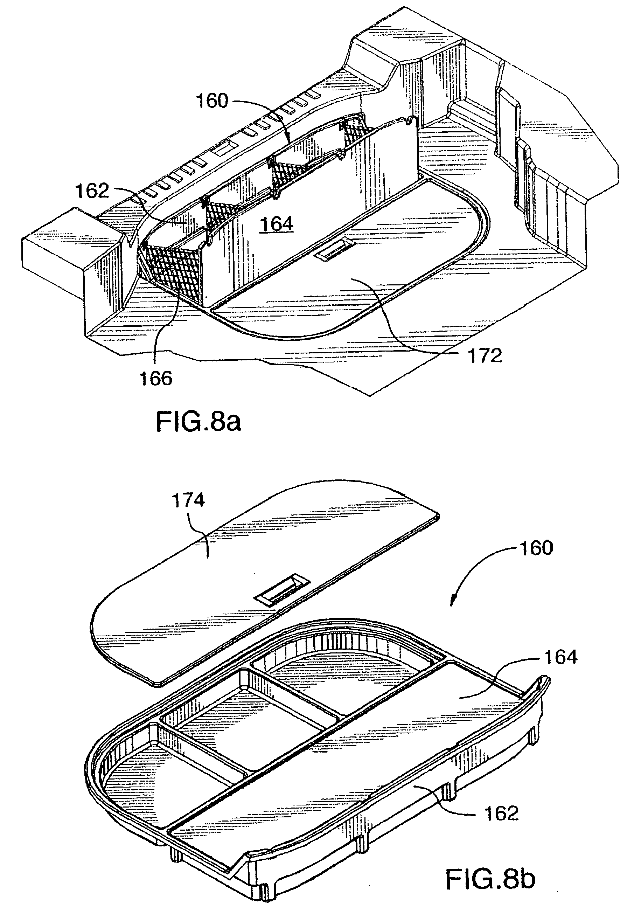

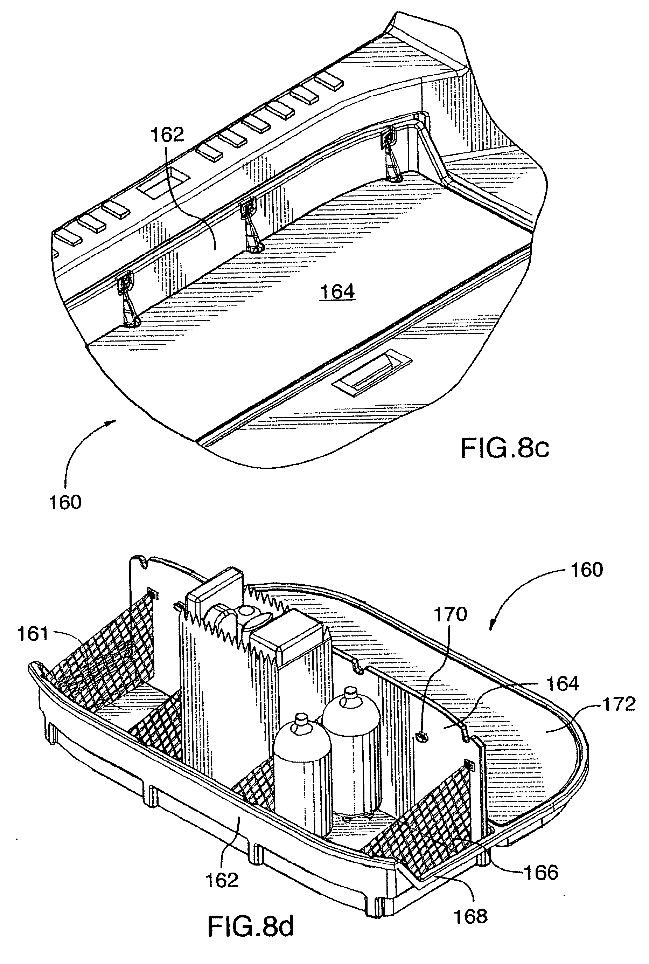

Turning to Figures 8a to 8d, a further embodiment of an organizer for storage space in an automobile is shown. Once again, this embodiment is directed for use in the trunk of an automobile. The organizer **160** comprises a base **161** having a fixed wall **162**, located along a long edge of the base, that is integrated into the side of the car trunk. Alternatively, the fixed wall **162** may be attached, via fastening means such as a threaded screw, to the side of the automobile trunk. The organizer **160** further comprises a divider wall **164** which is pivotally mounted to the base **161** so that it may be rotated from the in use position to the stored position and vice versa. Use of the partitions **166**, the ridge **168** and the bag hooks **170** are described above.

The organizer **160** is also integrated, as shown in Figure 8a, within the floor of the automobile trunk unlike the embodiments described above which have the organizer resting atop the floor of the automobile trunk. Therefore, when the organizer **160** is in the stored position, the car trunk is returned to its original shape and size.

The organizer **160** may further comprises a separate storage area **172** which includes a removable cover **174** so that smaller items such as jumper cables and motor oil may be stored without taking up space in the trunk. Although shown as three separate sections, it will be understood that the storage area **172** may comprise any number of storage sections.

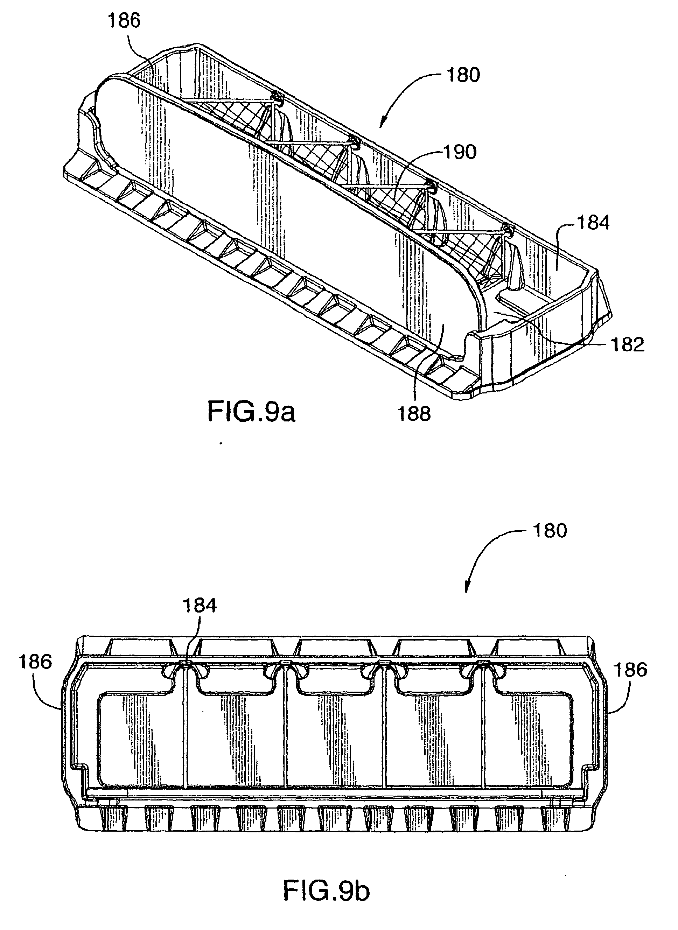

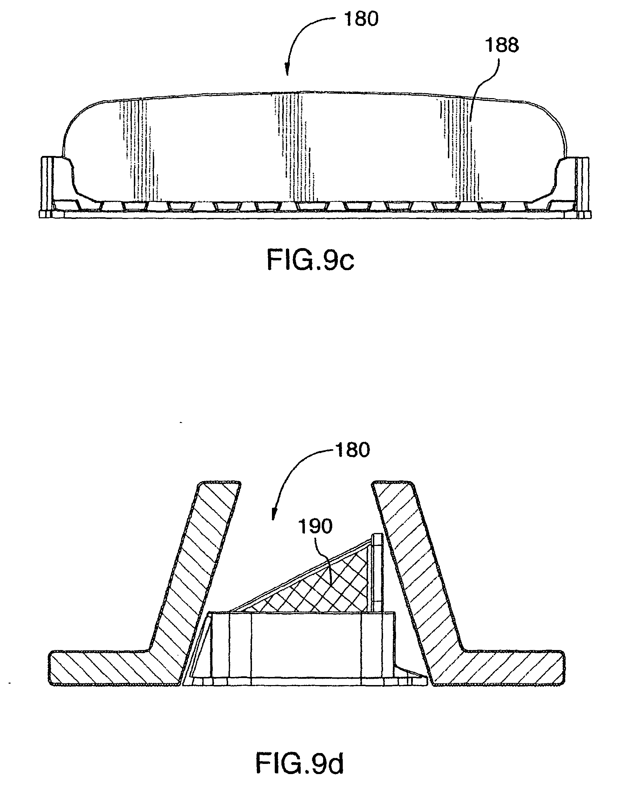

Turning to Figures 9a to 9d, yet another embodiment of an organizer is shown. The organizer **180** comprises a base **182** having a fixed wall **184** extending upwardly from the base along a long edge of the base **182.** A couple of side walls **186**, generally formed along with the fixed wall **184** are located parallel to each other at opposite ends of the fixed wall **184.** A divider wall **188** is pivotally mounted generally parallel to and spaced apart from the fixed wall **184.** Partitions, seen as net dividers, **190** are connected between the divider wall **188** and the fixed wall **184** to separate the storage space defined by the fixed wall **184**, the side walls **186** and the divider wall **188** when the divider wall is upright and in the in use position. When in the stored position, the divider wall **188** lies flat along the base so that it does not take up any extra space.

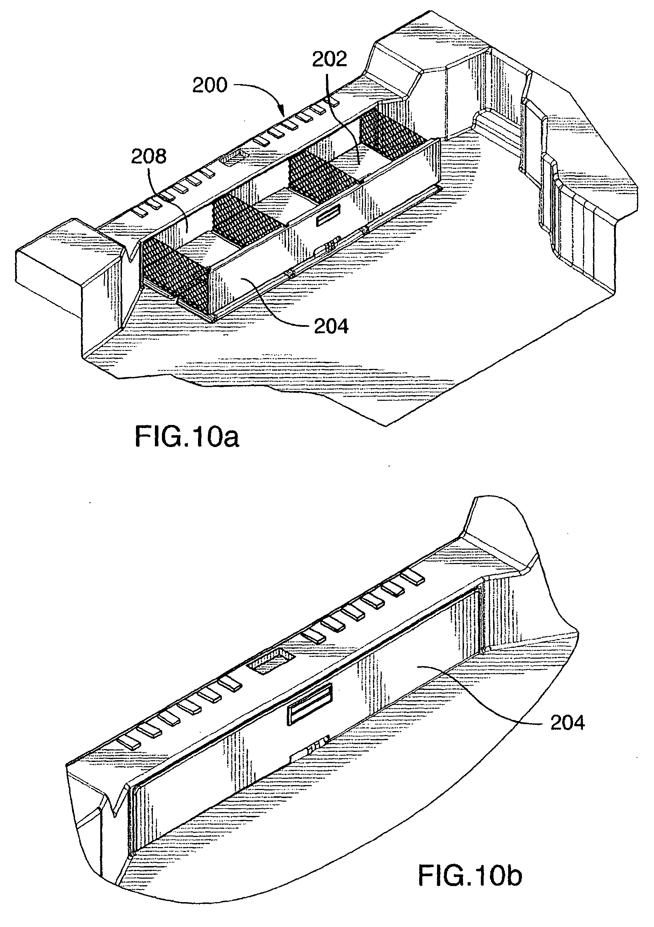

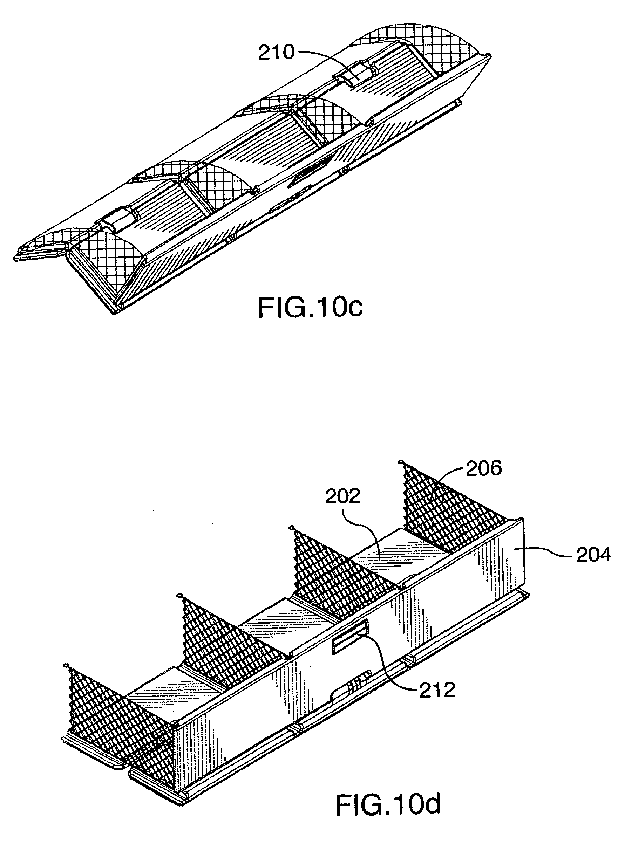

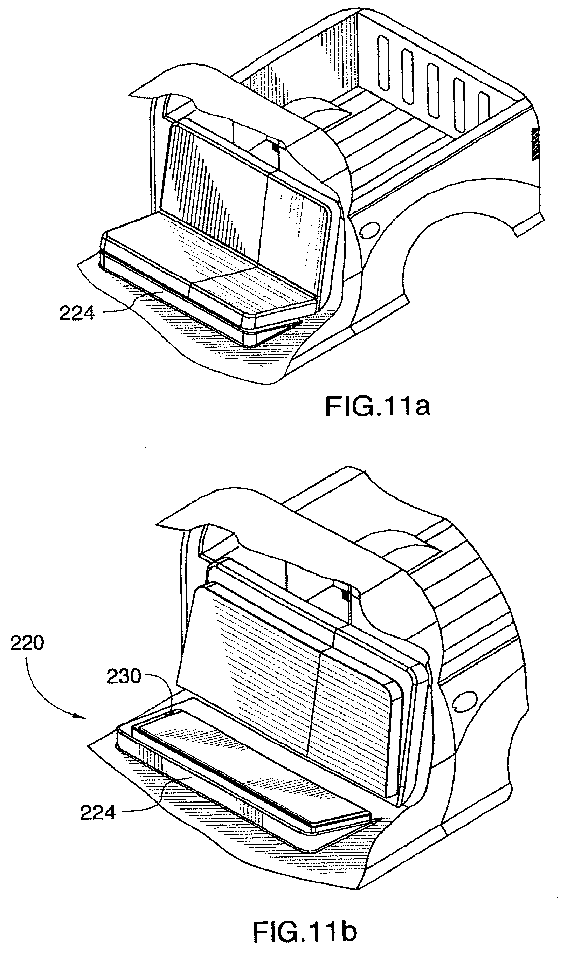

Turning to Figures 10a to 10d, yet a further embodiment of an organizer is shown. In this embodiment, the organizer **200** comprises a base **202** having a divider wall **204** attached along edge of the base **202**. Partitions, seen as net dividers, **206** are attached between the divider wall **204** and a fixed wall **208** seen as the sill plate within the car trunk. In this manner, there is no requirement for the organizer to have a fixed wall connected along a long edge of the base as described with previous embodiment since the sill plates acts as the fixed wall for the organizer. In the in use position, the divider wall **204** is spaced apart from and generally parallel to the fixed wall **208**. In the stored position, the divider wall is parallel to the base **202.** Rather than being pivotally mounted along the base, the divider wall is simply attached to the base. However, the base **202** includes hinges **210** which allow it to fold when the base is being moved from the stored position to the in use position and vice versa. This may be more clearly seen in Figure 10c. The stored position is more clearly shown in Figure 10b. In order to move the organizer **200** from the stored position to the in use position, a handle **212** is located on the divider wall **204** for a user to grasp in order to pull the organizer out from the stored position.

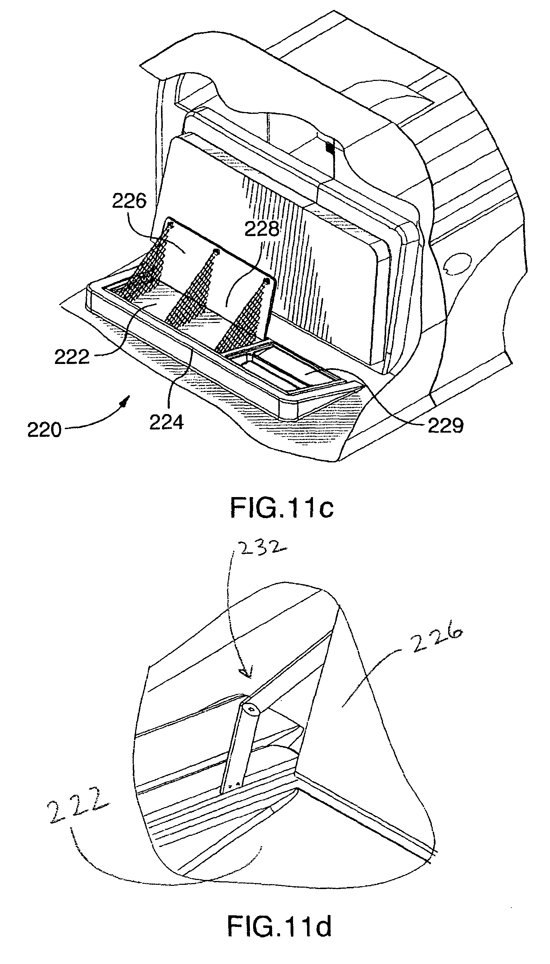

Turning to Figures 11a to 11d, yet a further embodiment of an organizer is shown. In this embodiment, the organizer is installed for use in the storage space underneath the cab seat of a vehicle such as a pick-up truck.

The organizer **220** comprises a base **222** which includes a fixed wall **224** extending upwardly from the base **222**. A divider wall **226** is pivotally attached to the base **222** so that when it is upright and in an in use position, the divider wall **226** is spaced apart and generally parallel to the fixed wall **224**. Alternatively, the divider wall **226** may be attached to the underside of the cab seat such that when a user lifts up the car seat to reveal the storage space, the divider wall **226** rotates from the stored position to the in use position. As with the other embodiments, partitions **228** are attached to the divider wall **226** and the fixed wall **224** in order to further separate the storage space provided in the underside of the cab seat of the pick-up truck. In this embodiment, the organizer also includes a side cargo pocket **229** adjacent the storage area defined by the fixed wall **224**, the divider wall **226** and the partitions **228**. It will be understood in other embodiments, the fixed wall and the divider wall may extend along the entire long edge of the base so that no side cargo pocket is present.

In order to prevent the divider wall **226** from pivoting without user intervention, a releasable latch/locking hinge **230,** is located adjacent the divider wall which requires a user to depress the hinge before lifting up the divider wall **226** to reveal the storage area.

Figure 11d provides an example of hinges **232** which may be used to pivotably attach the divider wall **226** to the base **222** such that the divider wall is hinged to the base at its side rather than its top as has been shown in previous embodiments.

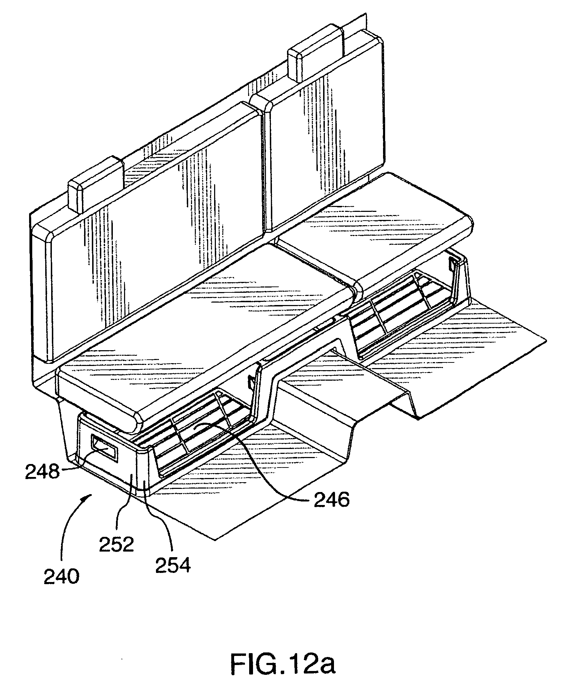

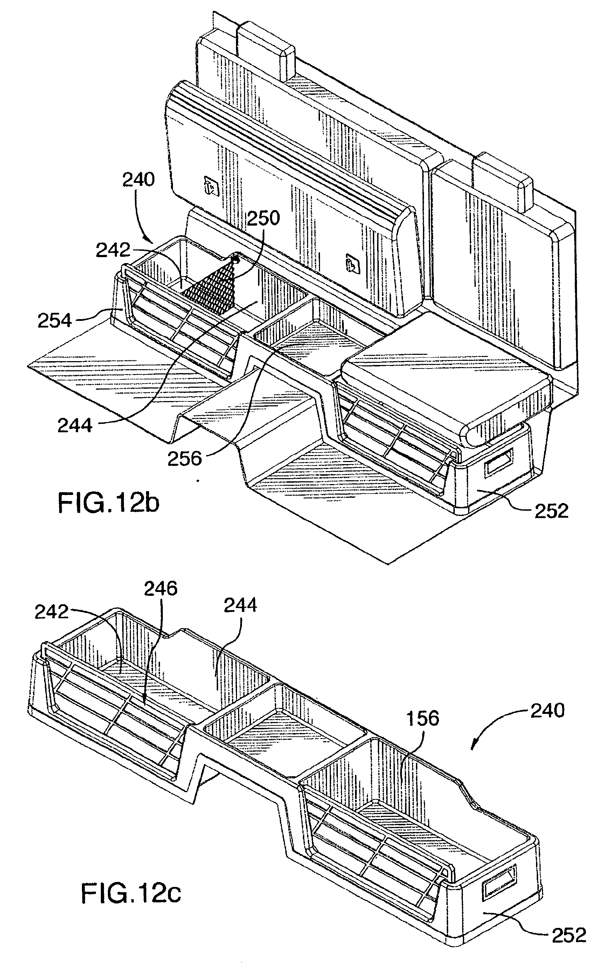

Turning to Figures 12a to 12c, another organizer for storage space in an automobile is shown. In this embodiment, the storage space is in the cab underseat of a vehicle.

The organizer **240** comprises a base **242** having a fixed wall **244** which extends upwardly from the base. A divider wall **246** is spaced apart from and generally parallel to the fixed wall and is hingedly connected to the base **242**. The organizer **240** may be removable from its location by the use of grab handles **248** located on each side of the organizer **240**. Partitions, seen as net dividers, **250** are also located between the fixed wall **244** and the divider **246** wall. In this embodiment, the organizer includes side walls **252** and support pillars **254** which provide support to the divider wall. The organizer **240** further includes means for maintaining the divider wall in an upright position when in the in use position. In order to access the storage space defined by the divider wall and the fixed wall, the cab seat of the vehicle is raised as shown in Figure 12b. The organizer may include an extra storage section **256**.

The organizer base is preferably manufactured from materials such as TPO, TPE, PP, PE and ABS. The base is preferably made with via a process such as injection molding, compression molding, thermoforming, or blow molding.

The divider wall is preferably rigid and spans the width of the vehicle but may be varying widths depending on the options integrated in the organizer. The divider wall is preferably manufactured from a wood, a wood by-product or plastics similar to the base. The divider wall may be manufactured from a process such as compression molding, blow molding, injection molding or thermoforming (single or twin sheet). The means for housing the partitions (such as net hooks or slots) may be over-molded or separately attached to the divider wall. The divider wall may also be covered with materials such as carpet, thermoset rubber, brushed metal or other vehicle integrating materials in order to provide a more consistent look.

The partitions used to separate the area (defined by the divider wall, the base and the fixed wall) may be rigid or flexible. Rigid materials such as polypropylene (PP), polyethylene (PE), Acrylonitrile-butadiene-styrene (ABS) are contemplated for the rigid partitions while flexible materials such as nylon nets, elasticized nets, fabric, may also be used for the flexible partitions.

It will be understood that the means for maintaining the divider wall in an upright position in embodiments with support pillars is preferably snap clips located on the support pillars. In embodiments where there are no support pillars, the means for maintaining the divider wall in an upright position is preferably cable activated locking hinges.

Although described as being located on the support pillars, the means for keeping the divider wall in an upright position in the in use position, may be located in other locations. Furthermore, although described as spring clips, the locking mechanism may be a spring loaded pin at the hinge point or any similar arrangement like a spring clip, toggle, cam, latch, and also a locking device at the hinge point.

The car trunk organizer may also be installed in the vehicle by different methods such as a set of clips fastening the organizer to the rear wall and/or trunk floor using existing mounting points in the vehicle or creating new mounting points. The organizer may also be attached to existing cargo tie down loops/hooks in the vehicle. The organizer can also be designed to be integral part of the sill plate thereby replacing current sill plates. The organizer could also be attached to or fixed in place by the spare tire cover or replace the spare tire cover. The vehicle geometry may be used to position/restrain the organizer in place.

Additional features that can be incorporated into the organizer are such things as a golf bag cradle, side pockets (to hold things like pop/milk jugs or miscellaneous items), access to cargo tie downs (either existing in vehicle or part of the organizer), and integrated lighting. Although shown as evenly spaced partitions, it will be understood that if the location of the means for holding the partitions may be altered at the time of manufacture in accordance with predefined specifications. Furthermore, the divider wall may be split 60/40 or 50/50, etc to align with the split in the rear seat.

Furthermore, although generally described as a fixed wall attached to the base, it will be understood that this is for installing the organizer in existing automobiles. Alternatively, the organizer may be integrated within the car so that fixed parts within the car such as the sill plate may be used as the fixed wall. This reduces the amount of materials necessary to manufacture the organizer.

Alternatively, the organizers may be manufactured with handles for easy removal of the organizer from the car when the full capacity of the storage space in the car is required for the transport of larger items. Furthermore, the organizer may also comprises a pocket which allows for side storage capabilities behind the wheel wells.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A collapsible organizer for dividing a vehicle storage area of a vehicle into at least two storage compartments comprising:
a base (12,34,52,72,122,142,161,182,202,222,242);
a fixed wall (14,32,54,74,124,144,162,184,208,224,244);
a divider wall (24,40,56,76,130,146,164,188,204,226,246), pivotally mounted to said base for rotation between a stored position against said base and an upright position spaced apart from and generally parallel to said fixed wall;
at least two partitions (26,42,58,132,148,166,190,206,228,250) extending between said fixed wall and said divider wall; and
means (17,60,80,300) for locking said divider wall in said upright position;
**characterised in that** said partitions are detachable.

2. The organizer of Claim 1 wherein at least two of said partitions (42,58,132,148,166,206,228) are adjacent opposite ends of said organizer, thereby acting as end walls.

3. The organizer of Claim 1 or Claim 2 wherein said partitions are flexible.

4. The organizer of any one of the preceding claims wherein said partitions are made out of netting.

5. The organizer of any one of the preceding claims wherein said fixed wall is integrated along a long edge of said base.

6. The organizer of any one of the preceding claims wherein said fixed wall (208) is a sill plate of said vehicle.

7. The organizer of any one of the preceding claims further comprising a secondary storage area (172,229,256).

8. The organizer of Claim 7 wherein said secondary storage area (172) includes a cover (174).

9. The organizer of any one of the preceding claims further including support pillars (16,38) for supporting said divider wall in said upright position.

10. The organizer of any one of the preceding claims wherein said means for locking said divider wall in said upright position are snap clips (17) or a locking hinge.

11. The organizer of any one of the preceding claims further comprising means (114,128) for attaching said organizer to a wall of an automobile trunk.

12. The organizer of any one of the preceding claims further comprising means for attaching said organizer to an automobile floor.

## Patentansprüche

1. Ein zusammenlegbarer Raumaufteiler zum Unterteilen eines Speicherraumes eines Fahrzeuges in mindestens zwei Speicherabteile, enthaltend:
eine Basis (12, 34, 52, 72, 122, 142, 161, 182, 202, 222, 242);
eine feststehende Wand (14, 32, 54, 74, 124, 144, 162, 184, 208, 224, 244);
eine Trennwand (24, 40, 56, 76, 130, 146, 164, 188, 204, 226, 246),
die zum Verschwenken zwischen einer gespeicherten Position, in der sie gegen die Basis anliegt, und einer aufrechten Position, in der sie sich im Abstand und im wesentlichen parallel zu dieser feststehenden Wand befindet, schwenkbar an dieser Basis angebracht ist;
mindestens zwei Aufteilungswände (26, 42, 58, 132, 148, 166, 190, 206, 228, 250), die sich zwischen dieser feststehenden Wand und der Trennwand erstrecken; und
Einrichtungen (17, 60, 80, 300) um diese Trennwand in der aufrechten Position zu verriegeln;
**dadurch gekennzeichnet, dass** diese Aufteilungswände abnehmbar sind.

2. Der Raumaufteiler nach Anspruch 1, bei dem diese Trennwände (42, 58, 132, 148, 166, 206, 228) benachbart zu den entgegengesetzten Enden des Raumaufteilers angeordnet und **dadurch** als Endwände wirksam sind.

3. Der Raumaufteiler nach Anspruch 1 oder Anspruch 2, bei dem diese Trennwände flexibel sind.

4. Der Raumaufteiler nach einem der vorhergehenden Ansprüche, bei dem diese Trennwände als Netze ausgebildet sind.

5. Der Raumaufteiler nach einem der vorhergehenden Ansprüche, bei dem diese feststehende Wand entlang eines Längsrandes dieser Basis integriert ist.

6. Der Raumaufteiler nach einem der vorhergehenden Ansprüche, bei dem diese feststehende Wand (208) eine Festfläche dieses Fahrzeuges ist.

7. Der Raumaufteiler nach einem der vorhergehenden Ansprüche, enthaltend weiterhin einen sekundären Speicherraum (172, 229, 256).

8. Der Raumaufteiler nach Anspruch 7, bei dem dieser sekundäre Speicherraum (172) einen Deckel (174) enthält.

9. Der Raumaufteiler nach einem der vorhergehenden Ansprüche, weiterhin enthaltend Stützen (16, 38) zum Abstützen dieser Trennwand in ihrer aufrechten Position.

10. Der Raumaufteiler nach einem der vorhergehenden Ansprüche, bei dem die Einrichtungen zum Verriegeln dieser Trennwand in der aufrechten Position Schnappclipse (17) oder ein Verriegelungsscharnier sind.

11. Der Raumaufteiler nach einem der vorhergehenden Ansprüche, weiterhin enthaltend Einrichtungen (114, 128) zum Befestigen dieses Raumaufteilers an einer Wand eines Kraftfahrzeug-Kofferraumes.

12. Der Raumaufteiler nach einem der vorhergehenden Ansprüche, weiterhin enthaltend Einrichtungen zur Befestigung dieses Raumaufteilers an einem Kraftfahrzeugboden.

## Revendications

1. Dispositif de rangement repliable destiné à diviser une zone de rangement d'un véhicule en au moins deux compartiments de rangement, comprenant :
une base (12, 34, 52, 72, 122, 142, 161, 182, 202, 222, 242);
une paroi fixe (14, 32, 54, 74, 124, 144, 162, 184, 208, 224, 244) ;
une paroi séparatrice (24, 40, 56, 76, 130, 146, 164, 188, 204, 226, 246), montée pivotante sur ladite base pour tourner entre une position rangée contre ladite base et une position redressée espacée de ladite paroi fixe et à peu près parallèle à cette dernière,
au moins deux cloisons (26, 42, 58, 132, 148, 166, 190, 206, 228, 250) qui s'étendent entre ladite paroi fixe et ladite paroi séparatrice ; et
des moyens (17, 60, 80, 300) destinés à bloquer ladite paroi séparatrice dans ladite position redressée ;
**caractérisé en ce que** lesdites cloisons sont détachables.

2. Dispositif de rangement selon la revendication 1, dans lequel au moins deux desdites cloisons (42, 58, 132, 148, 166, 206, 228) sont adjacentes à des extrémités opposés dudit dispositif de rangement, en jouant ainsi le rôle de parois d'extrémité.

3. Dispositif de rangement selon la revendication 1 ou la revendication 2, dans lequel lesdites cloisons sont flexibles.

4. Dispositif de rangement selon une quelconque des revendications précédentes, dans lequel lesdites cloisons sont faites de filet.

5. Dispositif de rangement selon une quelconque des revendications précédentes, dans lequel ladite paroi fixe est intégrée le long d'un grand bord de ladite base.

6. Dispositif de rangement selon une quelconque des revendications précédentes, dans lequel ladite paroi fixe (208) est une plaque de seuil dudit véhicule.

7. Dispositif de rangement selon une quelconque des revendications précédentes, comprenant en outre une zone de rangement secondaire (172, 229, 256).

8. Dispositif de rangement selon la revendication 7, dans lequel ladite zone de rangement secondaire (172) comprend un couvercle (174).

9. Dispositif de rangement selon une quelconque des revendications précédentes, comprenant en outre des piliers de support (16, 38) destinés à supporter ladite paroi séparatrice dans ladite position redressée.

10. Dispositif de rangement selon une quelconque des revendications précédentes, dans lequel lesdits moyens destinés à bloquer ladite paroi séparatrice dans ladite position redressée sont des attaches à ressort (17) ou une charnière de blocage.

11. Dispositif de rangement selon une quelconque des revendications précédentes, comprenant en outre des moyens (114, 128) destinés à attacher ledit dispositif de rangement à une paroi d'un coffre d'automobile.

12. Dispositif de rangement selon une quelconque des revendications précédentes, comprenant en outre des moyens pour attacher ledit dispositif de rangement à un plancher d'automobile.
